# EUROPEAN PATENT APPLICATION

(11) **EP 4 616 992 A1**
(43) Date of publication of application: **17.09.2025**
(21) Application number: 24836854.0
(22) Date of filing: 02.04.2024
(51) Int. Cl.: B23K 26/382, B23K 26/70

(54) **LASER DRILLING AND INSPECTION MACHINE ALLOWING FOR AUTOMATIC FLIPPING, AND DRILLING METHOD**

(30) Priority: 01.02.2024 CN 202410144662
(71) Applicant: Shanghai Modern Pharmaceutical Engineering Research Center Co., Ltd., Shanghai 201203 (CN)
(72) Inventor: HOU, Huimin, Shanghai 201203 (CN); ZHANG, Huiping, Shanghai 201203 (CN); ZHANG, Xiaohong, Shanghai 200137 (CN); LUO, Chunlin, Shanghai 201203 (CN); FU, Min, Shanghai 200137 (CN); QIAN, Mingying, Shanghai 201203 (CN); GONG, Zhong, Shanghai 200137 (CN); WANG, Jian, Shanghai 201203 (CN); WANG, Zhengfang, Shanghai 201203 (CN); REN, Yunmei, Shanghai 201203 (CN); WU, Chunyang, Shanghai 200137 (CN); XIE, Chunmiao, Shanghai 200137 (CN)
(74) Representative: Hoffmann Eitle
(86) International application number: PCT/CN2024/085543
(87) International publication number: WO 2025/161119

(57) **Abstract**

The disclosure relates to an automatic tablet-flipping and laser-perforating inspection machine. A surface-flipping device is located in a surface-flipping station region and is configured to perform a surface-flipping process on at least a part of the target object reaching the surface-flipping station region, such that the target object in a back-facing state is in a front-facing state. A perforating device is located in the perforating station region and configured to perform a perforating process on the target object reaching the perforating station region. **In** the above automatic tablet-flipping and laser-perforating inspection machine and the perforating method, when the target objects are supplied to the initial station region, although the front-facing state and the back-facing state exist, after the transporting device transports all target objects to the surface-flipping station region, the surface-flipping device can identify the target objects in the back-facing state, and performs the surface-flipping process on the target objects in the back-facing state, thereby preparing for the perforating process. After all the target objects are transported to the perforating station region, the perforating device can directly perform the perforating process on the target objects, which greatly improves the perforating efficiency of the target objects.

## Description

### TECHNICAL FIELD

The present disclosure relates to the field of pharmaceutical technology, in particular to an automatic tablet-flipping and laser-perforating inspection machine, and a perforating method.

### BACKGROUND

Oral osmotic pump tablets with slow release can be prepared by the osmosis principle, which can evenly release drugs *in vivo* for a long time. The oral osmotic pump tablets are made by wrapping tablet cores with semi-permeable membranes, and then drilling small holes in the membranes by a laser. After oral administration, the water *in vivo* enters the tablet cores through the semi-permeable membranes to dissolve the drugs or osmotic pressure generators, so as to generate osmotic pressures, thereby continuously pushing out the drugs, and thus it is also called osmotic pump tablets. There are various types of osmotic pump tablets, typically such as mono-chamber osmotic pump tablets and dual-chamber osmotic pump tablets.

The osmotic pressure generator of the mono-chamber osmotic pump tablet is mixed with the drug, and there is no need to distinguish the tablet according to the front and back sides. The small holes are drilled in both the front and back sides of the tablet to release the drug. The dual-chamber osmotic pump tablet has a two-layer structure, one layer is a drug storage, and the other layer is an osmotic pressure generator. The osmotic pressure generator absorbs water and collapses, generating a driving force to push the drug out through the small hole. Therefore, with respect to this type of controlled-release tablet, the small holes must be drilled on the coating layer at the side of the drug storage, otherwise the drug cannot be released. At present, the perforating device for the dual-chamber osmotic pump tablet has a low perforating efficiency, which can't meet the requirements of industrial production. Therefore, improving the perforating efficiency of the dual-chamber osmotic pump tablet has become a technical issue to be urgently addressed in this field.

### SUMMARY

Accordingly, it is necessary to provide an automatic tablet-flipping and laser-perforating inspection machine and a perforating method to improve the perforating efficiency of dual-chamber osmotic pump tablet.

The present disclosure provides an automatic tablet-flipping and laser-perforating inspection machine, including:

a transporting device having a transporting track, wherein the transporting track at least includes an initial station region, a surface-flipping station region, a perforating station region, and a finished-product station region, and the transporting device is configured to transport a target object along the transporting track, such that the target object located in the initial station region sequentially passes through the surface-flipping station region, the perforating station region, and the finished-product station region;
a surface-flipping device located in the surface-flipping station region, wherein the surface-flipping device is configured to perform a surface-flipping process on at least a part of the target object reaching the surface-flipping station region, such that the target object in a back-facing state is in a front-facing state; and
a perforating device located in the perforating station region and configured to perform a perforating process on the target object reaching the perforating station region.

In one of the embodiments, the automatic tablet-flipping and laser-perforating inspection machine includes:
a returning device, wherein the transporting track includes a returning station region located between the surface-flipping station region and the perforating station region, and the returning device is located in the returning station region and configured to perform a returning process on at least a part of the target object reaching the returning station region, such that the target object in the back-facing state is returned to the initial station region; and/or
at least one screening device, wherein the transporting track includes at least one screening station region located between the perforating station region and the finished-product station region, and the screening device is located in the screening station region and configured to perform a screening process on at least a part of the target object reaching the screening station region.

In one of the embodiments, the automatic tablet-flipping and laser-perforating inspection machine includes:
an identifying device configured to identify at least one of orientation state information and perforation state information of the target object;
wherein the surface-flipping device is configured to perform the surface-flipping process on the target object reaching the surface-flipping station region according to the orientation state information; and/or
the returning device is configured to perform the returning process on the target object reaching the returning station region according to the orientation state information; and/or
the perforating device is configured to perform the perforating process on the target object reaching the perforating station region according to the orientation state information; and/or
the screening device is configured to perform the screening process on the target object reaching the screening station region according to the perforation state information.

In one of the embodiments, the identifying device includes:
a first information acquiring member located in the surface-flipping station region and configured to acquire the orientation state information of the target object reaching the surface-flipping station region, wherein the surface-flipping device is configured to perform the surface-flipping process on the target object reaching the surface-flipping station region according to the orientation state information acquired by the first information acquiring member; and/or
a second information acquiring member located in the returning station region and configured to acquire the orientation state information of the target object reaching the returning station region, wherein the returning device is configured to perform the returning process on the target object reaching the returning station region according to the orientation state information acquired by the second information acquiring member, and the perforating device is configured to perform the perforating process on the target object reaching the perforating station region according to the orientation state information acquired by the second information acquiring member; and/or
at least one third information acquiring member located in the screening station region and configured to acquire the perforation state information of the target object reaching the screening station region, wherein at least one the screening device is configured to perform the screening process on the target object reaching the at least one the screening station region according to the perforation state information acquired by at least one the third information acquiring member.

In one of the embodiments, the transporting device includes:
a transporting platform defining a plurality of receiving slot-holes, wherein each receiving slot-hole includes a receiving hole section and an airflow hole section that are in communicated with each other, a hole size of the receiving hole section allows the target object to enter, a hole size of the airflow hole section prohibits the target object from entering, and each receiving slot-hole is capable of sequentially passing through the initial station region, the surface-flipping station region, the returning station region, the perforating station region, the screening station region, and the finished-product station region along the transporting track; and
a driving member drivingly connected to the transporting platform, wherein the transporting platform moves the target object in the receiving slot-hole along the transporting track under a driving action of the driving member.

In one of the embodiments, the transporting platform includes a basic platform and a moving platform, the receiving hole section is defined on the moving platform, the airflow hole section is defined on the basic platform, the driving member is disposed on the basic platform, the transporting track is a circular track, and the driving member is configured to drive the moving platform to rotate relative to the basic platform, such that different receiving hole section is capable of being in communication with different airflow hole section sequentially.

In one of the embodiments, the transporting device includes:
a lifting platform, a side of the lifting platform defining a circular recess, wherein the moving platform is a circular platform, and the circular platform is embedded in the circular recess; and
a lifting mechanism disposed on the basic platform, wherein the lifting mechanism is drivingly connected to the lifting platform, and is configured to drive the lifting platform to ascend or descend relative to the basic platform.

In one of the embodiments, the surface-flipping device includes:
a first fluid controlling member configured to apply at least one of a positive pressure driving gas and a negative pressure driving gas to the target object located in the receiving slot-hole through the airflow hole section, such that the target object in the back-facing state is turned to the front-facing state in the receiving slot-hole.

In one of the embodiments, the returning device includes:
a returning pipe, wherein an input pipe port of the returning pipe is in communication with the returning station region, and an output pipe port of the returning pipe is in communication with the initial station region; and
a second fluid controlling member configured to apply a positive pressure driving gas to the target object located in the receiving slot-hole through the airflow hole section, such that the target object is returned to the initial station region through the returning pipe.

In one of the embodiments, the screening device includes:
a screening pipe, wherein an input pipe port of the screening pipe is in communication with the screening station region, and an output pipe port of the screening pipe is in communication with a screening container; and
a third fluid controlling member configured to apply a positive pressure driving gas to the target object located in the receiving slot-hole through the airflow hole section, such that the target object enters the screening container through the returning pipe.

In one of the embodiments, the automatic tablet-flipping and laser-perforating inspection machine further includes:
a feeding device including a feeding chamber, wherein an interior of the feeding chamber has a feeding cavity, a bottom of the feeding chamber defines an open window in communication with the feeding cavity, the open window covers at least a part of the initial station region, a vertical distance between the feeding chamber and the initial station region is less than a height of the target object, the feeding device is configured to introduce the target object into the receiving slot-hole, and then move the target object to the surface-flipping station region; and/or
a finished-product storage device configured to store the target object reaching the finished-product station region.

The present disclosure further provides a perforating method, including the following steps:
a target object is transported along a transporting track, wherein the transporting track at least includes an initial station region, a surface-flipping station region, a returning station region, a perforating station region, a screening station region, and a finished-product station region, such that the target object located in the initial station region sequentially passes through the surface-flipping station region, the returning station region, the perforating station region, the screening station region, and the finished-product station region;
a surface-flipping process is performed on at least a part of the target object reaching the surface-flipping station region, such that the target object in a back-facing state is turned into a front-facing state; and
a perforating process is performed on the target object reaching the perforating station region;
wherein if the target object reaching the returning station region is in the back-facing state, a returning process is performed thereon, such that the target object in the back-facing state is returned to the initial station region, and if the target object reaching the screening station region does not meet a perforating criterion, a screening process is performed thereon.

In the above automatic tablet-flipping and laser-perforating inspection machine and the perforating method, when the target objects are supplied to the initial station region, although the front-facing state and the back-facing state exist, after the transporting device transports all target objects to the surface-flipping station region, the surface-flipping device can identify the target objects in the back-facing state, and performs the surface-flipping process on the target objects in the back-facing state, thereby preparing for the perforating process. After all the target objects are transported to the perforating station region, the perforating device can directly perform the perforating process on the target objects, which greatly improves the perforating efficiency of the target objects and meets the industrialization requirements.

### BRIEF DESCRIPTION OF THE DRAWINGS

FIG. 1 is a schematic structural view of an automatic tablet-flipping and laser-perforating inspection machine according to an embodiment of the present disclosure.
FIG. 2 is a schematic partial structural view of a surface-flipping device according to an embodiment of the present disclosure.
FIG. 3 is a schematic partial structural view of a returning device according to an embodiment of the present disclosure.
FIG. 4 is a schematic partial structural view of a screening device according to an embodiment of the present disclosure.
FIG. 5 is a schematic view of an assembly structure of a basic platform, a moving platform, and a lifting platform according to an embodiment of the present disclosure.
FIG. 6 is a schematic partial structural view of a storage hopper according to an embodiment of the present disclosure.

### Reference numerals:

1000: transporting device; 2000: surface-flipping device; 3000: perforating device; 4000: returning device; 5000: screening device; 6000: identifying device; 7000: feeding device; 8000: finished-product storage device;
1000a: transporting track; 1100: transporting platform; 1200: driving member;
1100a: receiving slot-hole; 1110: basic platform; 1120: moving platform; 1110a: airflow hole section; 1120a: receiving hole section; 1130: lifting platform; 1130a: lifting mechanism; 1130b: circular recess;
2100: first fluid controlling member;
4100: returning pipe; 4200: second fluid controlling member;
5100: screening pipe; 5200: third fluid controlling member;
6100: first information acquiring member; 6200: second information acquiring member; 6300: third information acquiring member;
7100: feeding chamber; 7200: storage hopper; 7200a: weight sensor; 7200b: support frame; 7200c: assembling element.

### DETAILED DESCRIPTION

The embodiments of the present disclosure will be described in detail with reference to the accompanying drawings in order to make the objects, features, and advantages of the present disclosure more clear and understandable. Many specific details are disclosed in the following description to facilitate a comprehensive understanding of the present disclosure. However, it should be noted that the present disclosure can be implemented in various ways different from those described herein, and those skilled in the art may make similar improvements without departing from the scope of the present disclosure. Therefore, the present disclosure is not limited to the specific embodiments disclosed below.

In the description of the present disclosure, it should be understood that, the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present disclosure and simplify the description only, rather than indicating or implying that the apparatus or element referred to must have a particular orientation or be constructed and operated in a particular orientation, and therefore are not to be interpreted as limiting the present disclosure.

In addition, the terms "first" and "second" are used for descriptive purposes only, and cannot be construed as indicating or implying a relative importance, or implicitly specifying the number of the indicated technical features. Thus, the feature defined with "first" or "second" may explicitly or implicitly include one or more features. In the description of the present disclosure, "a plurality of" means at least two, such as two or three, unless otherwise defined explicitly and specifically.

In the present disclosure, unless otherwise specified and defined explicitly, the terms "install", "connect", "join", and "fix" should be understood in a broad sense. For example, unless otherwise defined explicitly, they may refer to a fixed connection, a detachable connection, or an integral connection, may refer to a mechanical connection or electrical connection, and may refer to a direct connection, an indirect connection via an intermediate medium, an internal connection between two elements, or interaction between two elements. Those of ordinary skill in the art can understand specific meanings of these terms in the present disclosure based on specific circumstances.

In the present disclosure, unless otherwise specified and defined explicitly, the expression a first feature is expressed as being "on" or "under" a second feature may be the case that the first feature is in direct contact with the second feature, or the first feature is in indirect contact with the second feature via an intermediate medium. Furthermore, the first feature being "over", "above" or "on top of" the second feature may be the case that the first feature is directly above or obliquely above the second feature, or only means that the level height of the first feature is larger than that of the second feature. The first feature being "below", "underneath" or "under" the second feature may be the case that the first feature is directly underneath or obliquely underneath the second feature, or only means that the level height of the first feature is less than that of the second feature.

It should be noted that when one element is referred to as "fixed to" or "arranged on" another element, it may be directly disposed on the other element or an intermediate element may exist. When one element is considered to be "connected to" another element, it may be directly connected to the other element or an intermediate element may co-exist. The terms "vertical", "horizontal", "upper", "lower", "left", "right" and similar expressions used herein are for illustrative purposes only and do not represent the only implementation.

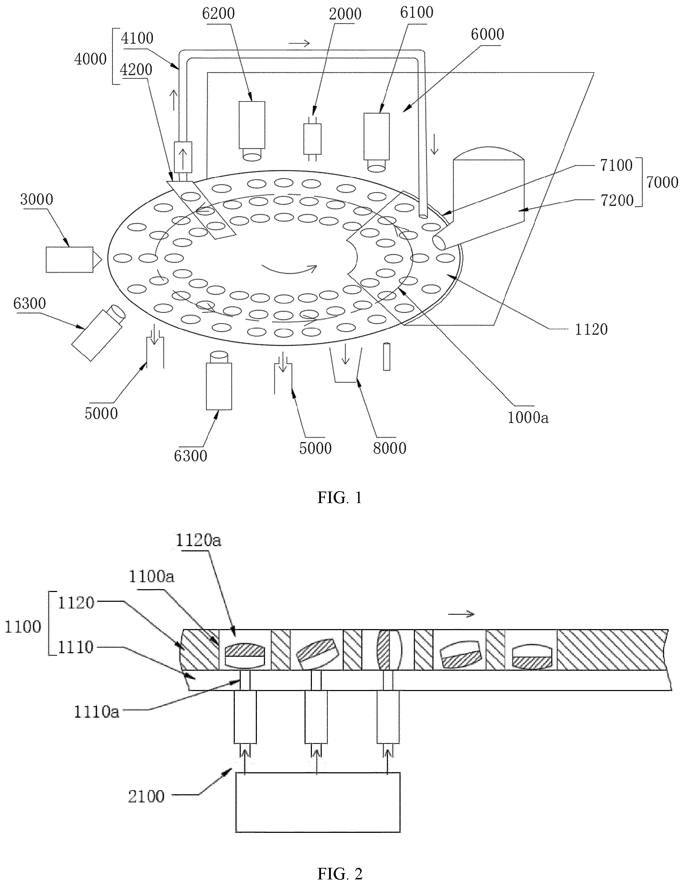

The present disclosure provides an automatic tablet-flipping and laser-perforating inspection machine. As shown in FIGs. 1 to 4, the automatic tablet-flipping and laser-perforating inspection machine can include a transporting device 1000, a surface-flipping device 2000, and a perforating device 3000. In addition, the automatic tablet-flipping and laser-perforating inspection machine can also be provided with a returning device 4000 and one or more screening devices 5000 as needed. The automatic tablet-flipping and laser-perforating inspection machine can be used for a perforating process of the target object such as dual-chamber osmotic pump tablet. The dual-chamber osmotic pump tablet is known to have a two-layer structure. As shown in FIG. 2, one side of the dual-chamber osmotic pump tablet is a shadow side, and the other side thereof is a non-shadow side, representing that one layer of the dual-chamber osmotic pump tablet is a drug storage, and the other layer is an osmotic pressure generator. The small holes must be drilled on the coating layer at the side of the drug storage. To facilitate the description of the technical solutions, the front-facing state of the target object can be defined as the drug storage side of the dual-chamber osmotic pump tablet facing up and represented by the non-shadow side. The back-facing state of the target object can be defined as the drug storage side of the dual-chamber osmotic pump tablet facing down and represented by the shadow side. In addition, those skilled in the art can also apply the automatic tablet-flipping and laser-perforating inspection machine to other perforating scenarios as needed, which is not limited herein.

The transporting device 1000 is a device configured to transport the target object. The transporting device 1000 can be preset with a specific transporting track 1000a, and the transporting track 1000a at least includes an initial station region, a surface-flipping station region, a perforating station region, and a finished-product station region. The transporting device 1000 is configured to transport the target object along the transporting track 1000a, such that the target object located in the initial station region sequentially passes through the surface-flipping station region, the perforating station region, and the finished-product station region under the active transportation of the transporting device 1000. The target object can be subjected to different targeted process operation in each station region. Therefore, the transporting track 1000a is pre-fixed on the transporting device 1000, and multiple station regions such as the initial station region, the surface-flipping station region, the perforating station region, and the finished-product station region are also sequentially fixed in the transporting track 1000a. The function of the transporting device 1000 is to drive the target object along the transporting track 1000a, so that the target object moves relative to multiple different station regions, thereby sequentially passing through various station regions such as the initial station region, the surface-flipping station region, the perforating station region, and the finished-product station region.

The transporting device 1000 may include a transporting platform 1100, which can define a plurality of receiving slot-holes 1100a. The function of the receiving slot-holes 1100a is to accommodate the target objects, such that the target objects can be regularly arranged on the transporting platform 1100 according to the distribution rule of the preset receiving slot-holes 1100a. Each receiving slot-hole 1100a include a receiving hole section 1120a and an airflow hole section 1110a that are in communicated with each other. A hole size of the airflow hole section is greater than a hole size of the receiving hole section 1110a, so that the hole size of the receiving hole section 1120a allows the target object to enter, and the hole size of the airflow hole section 1110a prohibits the target object from entering, thereby restricting the target object in the receiving hole section 1120a. Therefore, the target object can be accommodated in the space of the receiving hole section 1120a of the receiving slot-hole 1100a.

In one of the embodiments, the transporting platform 1100 can further include a basic platform 1110 and a moving platform 1120. The receiving hole section 1120a is defined on the moving platform 1120, the airflow hole section 1110a is defined on the basic platform 1110. The driving member 1200 is disposed on the basic platform 1110, and the driving member 1200 is configured to drive the moving platform 1120 to rotate relative to the basic platform 1110, such that different receiving hole section 1120a can be in communication with different airflow hole section 1110a sequentially.

For example, when the moving platform 1120 rotates, the receiving hole section 1120a on the moving platform 1120 also rotates accordingly. When one or some receiving hole sections 1120a pass through various station regions such as the initial station region, the surface-flipping station region, the returning station region, the perforating station region, the screening station region, and the finished-product station region, the receiving hole section 1120a will form an upper and lower position corresponding relationship with the receiving hole section 1120a of different station regions such as the initial station region, the surface-flipping station region, the returning station region, the perforating station region, the screening station region, and the finished-product station region, and thus forming a corresponding communication with each other.

Thus, as the moving platform 1120 of the transporting platform 1100 rotates relative to the basic platform 1110, each receiving hole section 1120a can sequentially pass through an initial station region, a surface-flipping station region, a returning station region, a perforating station region, a screening station region, and a finished-product station region along the transporting track 1000a, thereby moving the target object in the receiving hole section 1120a along the transporting track 1000a. The moving platform 1120 may be provided with two or more receiving hole sections 1120a in a direction perpendicular to the transporting track 1000a, and correspondingly the basic platform 1110 may also be provided with two or more corresponding airflow hole sections 1110a in a direction perpendicular to the transporting track 1000a. As a result, two or more receiving hole sections 1120a can pass through each station region simultaneously, and two or more target objects can be subject to a corresponding process at a time in different station regions.

In one of the embodiments, the transporting track 1000a can be a circular track having a central axis. The driving member 1200 is configured to drive the moving platform 1120 to rotate in a fixed axis along the central axis. For example, the driving member 1200 is a rotating motor that drives the moving platform 1120 to rotate along the central axis. The transporting platform 1100 may be circular or non-circular, as long as it can drive the target object to move along the circular track, and thus each receiving hole section 1120a can sequentially pass through the initial station region, the surface-flipping station region, the returning station region, the perforating station region, the screening station region, and the finished-product station region along the transporting track 1000a. Moreover, after one cycle, it can again circulate through various station regions such as the initial station region, the surface-flipping station region, the returning station region, the perforating station region, the screening station region, and the finished-product station region.

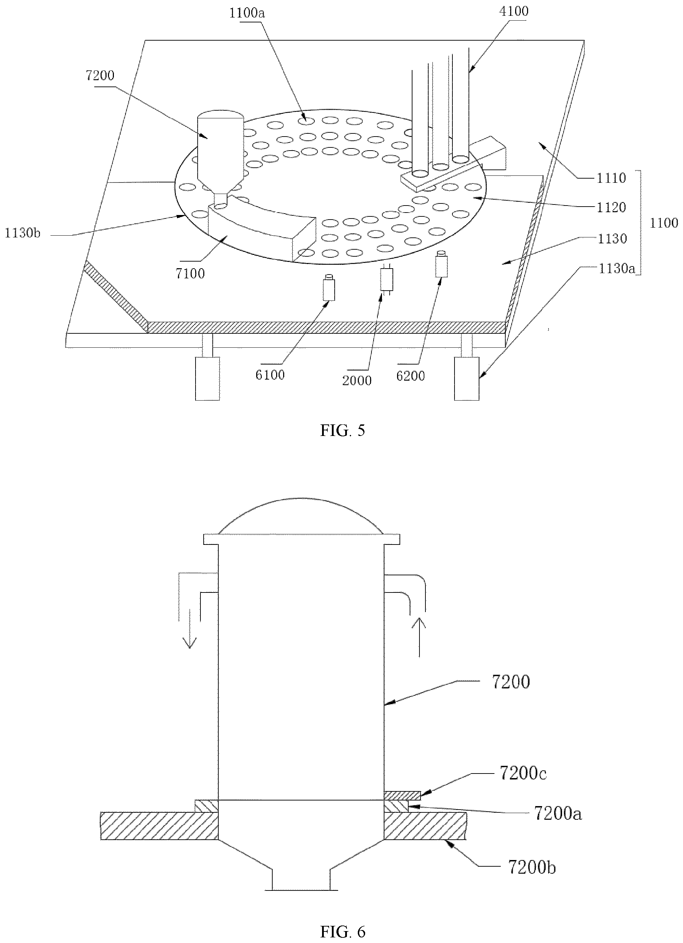

The automatic tablet-flipping and laser-perforating inspection machine will produce smog and dust during the operation, and thus cleaning is needed at the end of the work. Because the light source, camera, laser emitter, solenoid valve, turntable and other components in the automatic tablet-flipping and laser-perforating inspection machine cannot be completely disassembled and cleaned, the conventional cleaning is not thorough. Referring still to FIG. 5, in one of the embodiments, the transporting device can include a lifting platform 1130 and a lifting mechanism 1130a. A side of the lifting platform 1130 has a circular recess 1130b, the moving platform is a circular platform, and the circular platform is embedded in the circular recess 1130b. The moving platform 1120 can rotate relative to the lifting platform 1130. The lifting mechanism 1130a is disposed on the basic platform 1130, the lifting mechanism 1130a is drivingly connected to the lifting platform 1130, and is configured to drive the lifting platform 1130 to ascend or descend relative to the basic platform 1130.

During the operation, the lifting mechanism 1130a can control the lifting platform 1130 to be at a height parallel to the moving platform 1120, so that the circular platform is embedded in the circular recess 1130b. After the operation is completed, the lifting mechanism 1130a can control the lifting platform 1130 to ascend, so that the lifting platform 1130 is higher than the moving platform 1120, and then the moving platform 1120 can be taken out and cleaned individually. The receiving slot-hole 1100a that accommodates the target object is the place where the dust is stored most in the automatic tablet-flipping and laser-perforating inspection machine, and thus is also the key cleaning position.

Referring still to FIGs. 1 and 2, the surface-flipping device 2000 is located in the surface-flipping station region, and is configured to perform a surface-flipping process on the target objects reaching the surface-flipping station region. Precisely, the target objects in a back-facing state are flipped to enable the target objects in the back-facing state to be turned into the front-facing state. When the transporting device 1000 transports the target objects from the initial station region to the surface-flipping station region, all target objects reaching the surface-flipping station region include the target objects in the back-facing state and target objects in the front-facing state. The target objects in the front-facing state can be directly perforated, and thus do not need to be flipped. Therefore, the surface-flipping device 2000 mainly performs the surface-flipping process on the target objects in the back-facing state.

Whether the target object is in the back-facing state or in the front-facing state can be identified by an identifying device 6000 provided in the automatic tablet-flipping and laser-perforating inspection machine. The identifying device 6000 functions to identify the information of the target object as required such as orientation state information and perforation state information, thereby guiding the corresponding operation of the automatic tablet-flipping and laser-perforating inspection machine based on the acquired information. The identifying device 6000 can acquire required information by a device capable of acquiring image data such as a camera. For example, the identifying device 6000 includes a first information acquiring member 6100, which can be a camera. The first information acquiring member 6100 is located in the surface-flipping station region and used for acquiring the orientation state information of the target object reaching the surface-flipping station region. The orientation state information of the target object will recognize the back-facing state and front-facing state of the target object. The surface-flipping device 2000 then identifies the target object reaching the surface-flipping station region based on the orientation state information acquired by the first information acquiring member 6100, and performs a surface-flipping process on the target object in the back-facing state.

The perforating device 3000 is located in the perforating station region, and functions to perform a perforating process on the target object reaching the perforating station region. The perforating device 3000 can perforate the target object in a variety of ways. For example, the perforating device 3000 can employ a laser machine, such as a water-cooled 100W carbon dioxide laser machine as needed. This laser machine runs stably, the output power is adjustable and displayable, and it can meet the large-scale production. In addition, it can be set to automatically delay the start of the laser machine for 5 minutes after startup, effectively protecting the laser machine and prolonging its service life. The surface-flipping device 2000 has performed the surface-flipping process on the target object in the back-facing state during the process that the transporting device 1000 transports the target object from the initial station region to the surface-flipping station region, so that the target object in the back-facing state has been flipped to be in the front-facing state when the transporting device 1000 transports the target object that has passed through the surface-flipping station region to the perforating station region, thereby preparing for perforating.

In the above process, although the front-facing state and the back-facing state both exist when the target objects are supplied to the initial station region, when the transporting device 1000 transports all the target objects to the surface-flipping station region, the surface-flipping device 2000 can identify the target objects in the back-facing state and perform the surface-flipping process on the target object in the back-facing state, thereby preparing for the perforating process. When all the target objects are transported to the perforating station region, the perforating device 3000 can directly perforate the target objects. In this process, the perforation efficiency of the target objects can be greatly improved to meet the industrialization requirements.

In addition, in one of the embodiments, the automatic tablet-flipping laser-perforating inspection machine further includes a returning device 4000, and thus the transporting track 1000a can include a returning station region. The returning station region is located between the surface-flipping station region and the perforating station region. The returning device 4000 functions to perform a returning process on the target objects reaching the returning station region. After the transporting device 1000 transports the target objects from the initial station region to the surface-flipping station region, the surface-flipping device 2000 performs the surface-flipping process on the target objects in the back-facing state. However, given that the flipping success rate of the surface-flipping device 2000, the target objects that have not been flipped or have not been flipped successfully may be transported to the perforating station region, and thus the returning station region is disposed between the surface-flipping station region and the perforating station region. All target objects reaching the returning station region are reexamined by the returning device 4000.

The reexamination of the target object can be performed by an identifying device 6000 provided in the automatic tablet-flipping and laser-perforating inspection machine. The identifying device 6000 functions to identify the information of the target object as required such as orientation state information and perforation state information, thereby guiding the corresponding operation of the automatic tablet-flipping and laser-perforating inspection machine based on the acquired information. The identifying device 6000 can acquire the required information by a device capable of acquiring image data such as a camera. For example, the identifying device 6000 includes a second information acquiring member 6200, which can be a camera. The second information acquiring member 6200 located in the returning station region and used for acquiring the orientation state information of the target object reaching the returning station region. The orientation state information of the target object will recognize the back-facing state and front-facing state of the target object. The returning device 4000 then identifies the target object reaching the returning station region again based on the orientation state information acquired by the second information acquiring member 6200. If the target object is found to be in the back-facing state, it will be subjected to the returning process, so that the target object in the back-facing state is returned to the initial station region, transported again by the transporting device 1000, and moves from the initial station region along the transporting track 1000a again, repeating the above steps.

In addition, in one of the embodiments, the automatic tablet-flipping and laser-perforating inspection machine further includes at least one screening device 5000. The transporting track 1000a includes at least one screening station region. For example, when one screening station region is provided, the one screening station region can be located between the perforating station region and the finished-product station region, and the screening device 5000 is located in the screening station region. When two or more screening station regions are provided, the plurality of screening station regions can also be located between the perforating station region and the finished-product station region, and the plurality of screening station regions are also sequentially arranged along the transporting track 1000a. As a result, the target object can pass through each screening station region in sequence.

The number of the screening devices 5000 can be provided the same as the number of the screening station region, so that the plurality of screening devices 5000 can be respectively located in different screening station regions. The screening device 5000 functions to perform the screening process on the target object reaching the screening station region. After the transporting device 1000 transports the target object from the initial station region to the surface-flipping station region and the perforating station region in sequence, and each target object is subjected to the perforating process, the perforated target object should be collected and output as a finished-product in the finished-product station region. The finished-product storage device 8000 can be configured to receive and store the target object reaching the finished-product station region.

Given that the perforation qualification rate of the perforating device 3000, not all of the target objects are perforated, or not all of the target objects after the perforating process meet the perforation criteria. Therefore, a screening station region can be disposed between the perforating station region and the finished-product station region, and all target objects reaching the screening station region can be reexamined by the screening device 5000.

The reexamination of the target object can be performed by an identifying device 6000 provided in the automatic tablet-flipping and laser-perforating inspection machine. The identifying device 6000 functions to identify the information of the target object as required such as orientation state information and perforation state information, thereby guiding the corresponding operation of the automatic tablet-flipping and laser-perforating inspection machine based on the acquired information. The identifying device 6000 can acquire the required information by a device capable of acquiring image data such as a camera. For example, the identifying device 6000 includes a third information acquiring member 6300, which can be a camera. The third information acquiring member 6300 located in the screening station region and used for acquiring the perforation state information of the target object reaching the screening station region. The perforation state information of the target object can indicate whether the target object is perforated, whether the size of the perforated hole meets the criteria, whether the perforated position is offset from the center, or the like, thereby being compared with the perforation criteria and screening out the unqualified target object that does not meet the perforation criteria.

The screening device 5000 can identify the target object reaching the screening station region again according to the perforation state information acquired by the third information acquiring member 6300 and perform the screening process on the unqualified target object which does not meet the perforation criteria if found.

The surface-flipping process of the surface-flipping device 2000, the returning process of the returning device 4000, and the screening process of the screening device 5000 can be implemented in various ways, such as robotic arm gripping, fluid impact, and other feasible ways. In one of the embodiments, the surface-flipping device 2000, the returning device 4000, and the screening device 5000 of the present disclosure can perform the corresponding process based on the pneumatic principle. As shown in FIG. 2, in one of the embodiments, each receiving slot-hole 1100a can include an airflow hole section 1110a and a receiving hole section 1120a. When the transporting platform 1100 is designed as a separable structure including a basic platform 1110 and a moving platform 1120, the receiving hole section 1120a is defined on the moving platform 1120, and the airflow hole section 1110a is defined on the basic platform 1110. The shape of the airflow hole section 1110a is not limited, as long as the airflow can pass through it stably and the target object does not fall from the airflow hole section 1110a.

Based on the airflow hole section 1110a, the airflow can be applied to the target object, or the target object can be turned, or the target object can be shifted in position, etc. For example, in one of the embodiments, the surface-flipping device 2000 includes a first fluid controlling member 2100 for applying a positive pressure driving gas or a negative pressure driving gas via the airflow hole section 1110a to the target object within the receiving slot-hole 1100a. According to the designs such as application position, and application angle, the target object is turned from the back-facing state to the front-facing state in the receiving slot-hole1100a. For example, the positive pressure driving gas or the negative pressure driving gas applied to the target object during the surface-flipping process can synergistically cooperate with the centrifugal force produced during the movement of the target object. When the transporting track 1000a is a circular track, the transporting device 1000 can drive the target object to cyclically rotate along the circular track. During this process, the target object can generate an outward centrifugal force and a forward impulse force along the circular track, and meanwhile the first fluid controlling member 2100 can apply the positive pressure driving gas or the negative pressure driving gas to the target object located in the receiving slot-hole 1100a through the airflow hole section 1110a. By setting the positive pressure driving gas or the negative pressure driving gas to be applied at a certain time, a certain angle, and a certain size, the target object can be flipped quickly and accurately, and the success rate of surface-flipping is also high. Parameters such as the application force of the positive pressure driving gas or the negative pressure driving gas can be controlled by a solenoid valve and a logic controller, which can be set by those skilled in the art according to actual needs, and are not limited herein.

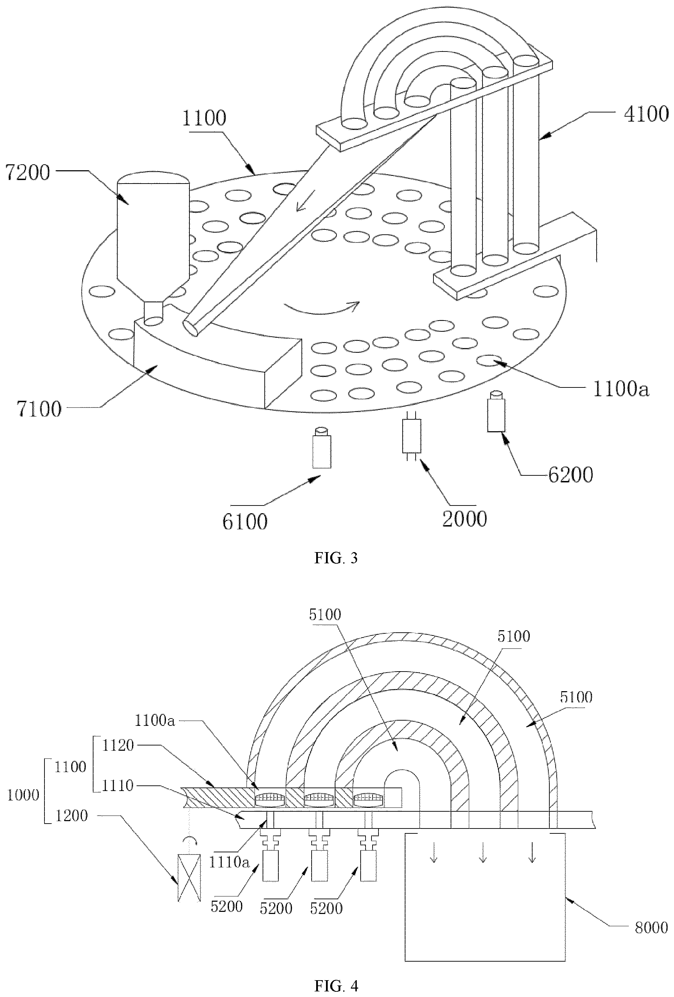

Referring still to FIG. 3, in one of the embodiments, the returning device 4000 includes a returning pipe 4100 and a second fluid controlling member 4200. An input pipe port of the returning pipe 4100 is in communication with the returning station region, and an output pipe port of the returning pipe 4100 is in communication with the initial station region. One or more the returning pipes 4100 can be provided. According to demands, the input pipe port of the returning pipe 4100 and the position through which the receiving slot-hole 1100a can pass are corresponded, so that when the transporting device 1000 transports the target object in the receiving slot-hole 1100a, the input pipe port of the returning pipe 4100 can be exactly in communication with the receiving slot-hole 1100a. When there is a need to return the corresponding target object, the second fluid controlling member 4200 can apply the positive pressure driving gas to the target object located in the receiving slot-hole 1100a through the airflow hole section 1110a. The positive pressure driving force can force the target object to leave the receiving slot-hole 1100a, and then to move along the returning pipe 4100, so that the target object returns to the initial station region through the returning pipe 4100.

Referring still to FIG. 3, in one of the embodiments, the screening device 5000 includes a screening pipe 5100 and a third fluid controlling member 5200. An input pipe port of the screening pipe 5100 is in communication with the screening station region, and an output pipe port of the screening pipe 5100 is in communication with a screening container. One or more screening pipes 5100 can be provided. According to demands, the input pipe port of the screening pipe 5100 and the position through which the receiving slot-hole 1100a can pass are corresponded, so that when the transporting device 1000 transports the target object in the receiving slot-hole 1100a, the input pipe port of the screening pipe 5100 can be exactly in communication with the receiving slot-hole 1100a. When there is a need to screen the corresponding target object, the third fluid controlling member 5200 can apply the positive pressure driving gas to the target object located in the receiving slot-hole 1100a through the airflow hole section 1110a. The positive pressure driving force can force the target object to leave the receiving slot-hole 1100a, and then to move along the screening pipe 5100, so that the target object enters the screening container through the screening pipe 5100.

Referring still to FIGs. 1 and 6, in one of the embodiments, the automatic tablet-flipping and laser-perforating inspection machine includes a feeding device 7000. The feeding device 7000 includes a feeding chamber 7100, an interior of the feeding chamber 7100 has a feeding cavity, and a bottom of the feeding chamber 7100 defines an open window in communication with the feeding cavity. The feeding chamber 7100 enables the open window to be opposite to the transporting platform 1100 of the transporting device 1000. The open window covers the initial station area with a covering area corresponding to the entire initial station region or at least a part of the initial station region. The feeding device 7000 can be provided with a pushing mechanism for introducing the target object into the receiving slot-hole 1100a. For example, the pushing mechanism includes a brush capable of sweeping the target object or the like. In addition, similar mechanisms capable of pushing the target object can be provided by a person skilled in the art, which are not limited herein, as long as the target object can be actively introduced into the receiving slot-hole 1100a.

Therefore, after the target object falls into the feeding chamber 7100, the provided pushing mechanism can actively introduce the target object into the receiving slot-hole 1100a, so as to ensure that after the target object is introduced into the receiving slot-hole 1100a, the target object can be accurately positioned in the corresponding receiving slot-hole 1100a, and then moves to the surface-flipping station region. The target object is positioned in each receiving slot-hole 1100a relatively fixedly, which can facilitate the subsequent surface-flipping process, returning process, perforating process, screening process, and the like.

Referring to FIG. 6, the feeding device 7000 can further include a storage hopper 7200 and a weight sensor 7200a. The storage hopper 7200 is configured to store the target object and applies the target object to the feeding chamber 7100. Therefore, the storage hopper 7200 needs to be in communication with the feeding chamber 7100. For example, the storage hopper 7200 is located above the feeding chamber 7100, and automatically supplies the target object to the feeding chamber 7100 by gravity, or actively transports the target object to the feeding chamber 7100 by other mechanical structures, which is not limited herein.

The storage hopper 7200 can be assembled and fixed by a support frame 7200b. The storage hopper 7200 can be provided with an assembling element 7200c. The storage hopper 7200 is assembled on the support frame 7200b by the assembling element 7200c. The weight sensor 7200a is provided on the storage hopper 7200, and is configured to detect the weight of the target object in the storage hopper 7200. Therefore, when the number of target objects in the storage hopper 7200 changes, the weight sensor acquires that the total weight of the targets object changes. When the weight data is less than a preset value, the target object can be automatically introduced to the storage hopper 7200 by using an adapted filling device, or the target object can be introduced manually, which is not limited herein.

The present disclosure provides a perforating method, including the following steps: a target object is transported along a transporting track 1000a. The transporting track 1000a at least includes an initial station region, a surface-flipping station region, a returning station region, a perforating station region, a screening station region, and a finished-product station region, such that the target object located in the initial station region sequentially passes through the surface-flipping station region, the returning station region, the perforating station region, the screening station region, and the finished-product station region.

A surface-flipping process is performed on at least a part of the target object reaching the surface-flipping station region, such that the target object in a back-facing state is in a front-facing state. A perforating process is performed on the target object reaching the perforating station region. When the target object reaching the returning station region is in the back-facing state, a returning process is performed thereon, such that the target object in the back-facing state is returned to the initial station region. When the target object reaching the screening station region does not meet a perforating criterion, a screening process is performed thereon.

In the above perforating method, when the target objects are supplied to the initial station region, although the front-facing state and the back-facing state exist, after the transporting device 1000 transports all target objects to the surface-flipping station region, the surface-flipping device 2000 can identify the target objects in the back-facing state, and performs the surface-flipping process on the target objects in the back-facing state, thereby preparing for the perforating process. After all the target objects are transported to the perforating station region, the perforating device 3000 can directly perform the perforating process on the target objects. In this process, the perforating efficiency of the target objects can be significantly improved, meeting the industrialization requirements. Moreover, before the perforating process, the target objects will be reexamined to prevent the target objects in the back-facing state from being perforated. Before the finished-product target objects are collected, it will be reexamined at least once to prevent the target objects that do not meet the perforation criterion from being collected. Through the above methods, a yield of 100% can be guaranteed, effectively improving the perforation efficiency of the target objects.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. An automatic tablet-flipping and laser-perforating inspection machine, comprising:
a transporting device having a transporting track, wherein the transporting track at least comprises an initial station region, a surface-flipping station region, a perforating station region, and a finished-product station region, and the transporting device is configured to transport a target object along the transporting track, such that the target object located in the initial station region sequentially passes through the surface-flipping station region, the perforating station region, and the finished-product station region;
a surface-flipping device located in the surface-flipping station region, wherein surface-flipping device is configured to perform a surface-flipping process on at least a part of the target object reaching the surface-flipping station region, such that the target object in a back-facing state is in a front-facing state; and
a perforating device located in the perforating station region and configured to perform a perforating process on the target object reaching the perforating station region.

2. The automatic tablet-flipping and laser-perforating inspection machine according to claim 1, comprising:
a returning device, wherein the transporting track comprises a returning station region located between the surface-flipping station region and the perforating station region, and the returning device is located in the returning station region and configured to perform a returning process on at least a part of the target object reaching the returning station region, such that the target object in the back-facing state is returned to the initial station region; and/or
at least one screening device, wherein the transporting track comprises at least one screening station region located between the perforating station region and the finished-product station region, and the screening device is located in the screening station region and configured to perform a screening process on at least a part of the target object reaching the screening station region.

3. The automatic tablet-flipping and laser-perforating inspection machine according to claim 2, further comprising:
an identifying device configured to identify at least one of orientation state information and perforation state information of the target object;
wherein the surface-flipping device is configured to perform the surface-flipping process on the target object reaching the surface-flipping station region according to the orientation state information; and/or
the returning device is configured to perform the returning process on the target object reaching the returning station region according to the orientation state information; and/or
the perforating device is configured to perform the perforating process on the target object reaching the perforating station region according to the orientation state information; and/or
the screening device is configured to perform the screening process on the target object reaching the screening station region according to the perforation state information.

4. The automatic tablet-flipping and laser-perforating inspection machine according to claim 3, wherein the identifying device comprises:
a first information acquiring member located in the surface-flipping station region and configured to acquire the orientation state information of the target object reaching the surface-flipping station region, wherein the surface-flipping device is configured to perform the surface-flipping process on the target object reaching the surface-flipping station region according to the orientation state information acquired by the first information acquiring member; and/or
a second information acquiring member located in the returning station region and configured to acquire the orientation state information of the target object reaching the returning station region, wherein the returning device is configured to perform the returning process on the target object reaching the returning station region according to the orientation state information acquired by the second information acquiring member, and the perforating device is configured to perform the perforating process on the target object reaching the perforating station region according to the orientation state information acquired by the second information acquiring member; and/or
at least one third information acquiring member located in the screening station region and configured to acquire the perforation state information of the target object reaching the screening station region, wherein at least one the screening device is configured to perform the screening process on the target object reaching the at least one the screening station region according to the perforation state information acquired by at least one third information acquiring member.

5. The automatic tablet-flipping and laser-perforating inspection machine according to claim 2, wherein the transporting device comprises:
a transporting platform defining a plurality of receiving slot-holes, wherein each receiving slot-hole comprise a receiving hole section and an airflow hole section that are in communicated with each other, a hole size of the receiving hole section allows the target object to enter, a hole size of the airflow hole section prohibits the target object from entering, and each receiving slot-hole is capable of sequentially passing through the initial station region, the surface-flipping station region, the returning station region, the perforating station region, the screening station region, and the finished-product station region along the transporting track; and
a driving member drivingly connected to the transporting platform, wherein the transporting platform moves the target object in the receiving slot-hole along the transporting track under a driving action of the driving member.

6. The automatic tablet-flipping and laser-perforating inspection machine according to claim 5, wherein the transporting platform includes a basic platform and a moving platform, the receiving hole section is defined on the moving platform, the airflow hole section is defined on the basic platform, the driving member is disposed on the basic platform, the transporting track is a circular track, and the driving member is configured to drive the moving platform to rotate relative to the basic platform, such that different receiving hole section is capable of being in communication with different airflow hole section sequentially.

7. The automatic tablet-flipping and laser-perforating inspection machine according to claim 6, wherein the transporting device comprises:
a lifting platform, a side of the lifting platform defining a circular recess, wherein the moving platform is a circular platform, and the circular platform is embedded in the circular recess; and
a lifting mechanism disposed on the basic platform, wherein the lifting mechanism is drivingly connected to the lifting platform, and is configured to drive the lifting platform to ascend or descend relative to the basic platform.

8. The automatic tablet-flipping and laser-perforating inspection machine according to claim 7, wherein the surface-flipping device comprises a first fluid controlling member configured to apply at least one of a positive pressure driving gas and a negative pressure driving gas to the target object located in the receiving slot-hole through the airflow hole section, such that the target object in the back-facing state is turned to the front-facing state in the receiving slot-hole.

9. The automatic tablet-flipping and laser-perforating inspection machine according to claim 5, wherein the returning device comprises:
a returning pipe, wherein an input pipe port of the returning pipe is in communication with the returning station region, and an output pipe port of the returning pipe is in communication with the initial station region; and
a second fluid controlling member configured to apply a positive pressure driving gas to the target object located in the receiving slot-hole through the airflow hole section, such that the target object is returned to the initial station region through the returning pipe.

10. The automatic tablet-flipping and laser-perforating inspection machine according to claim 5, wherein the screening device comprises:
a screening pipe, wherein an input pipe port of the screening pipe is in communication with the screening station region, and an output pipe port of the screening pipe is in communication with a screening container; and
a third fluid controlling member configured to apply a positive pressure driving gas to the target object located in the receiving slot-hole through the airflow hole section, such that the target object enters the screening container through the returning pipe.

11. The automatic tablet-flipping and laser-perforating inspection machine according to claim 5, further comprising:
a feeding device comprising a feeding chamber, wherein an interior of the feeding chamber has a feeding cavity, a bottom of the feeding chamber defines an open window in communication with the feeding cavity, the open window covers at least a part of the initial station region, a vertical distance between the feeding chamber and the initial station region is less than a height of the target object, the feeding device is configured to introduce the target object into the receiving slot-hole, and then move the target object to the surface-flipping station region; and/or
a finished-product storage device configured to store the target object reaching the finished-product station region.

12. A perforating method, comprising the following steps of:
transporting a target object along a transporting track, wherein the transporting track at least comprises an initial station region, a surface-flipping station region, a returning station region, a perforating station region, a screening station region, and a finished-product station region, such that the target object located in the initial station region sequentially passes through the surface-flipping station region, the returning station region, the perforating station region, the screening station region, and the finished-product station region;
performing a surface-flipping process on at least a part of the target object reaching the surface-flipping station region, such that the target object in a back-facing state is turned into a front-facing state; and
performing a perforating process on the target object reaching the perforating station region;
wherein if the target object reaching the returning station region is in the back-facing state, a returning process is performed thereon, such that the target object in the back-facing state is returned to the initial station region, and if the target object reaching the screening station region does not meet a perforating criterion, a screening process is performed thereon.
